# DEMANDE DE BREVET EUROPEEN

(11) **EP 2 034 712 A1**
(43) Date de publication de la demande: **11.03.2009**
(21) Numéro de dépôt: 08290810.4
(22) Date de dépôt: 28.08.2008
(51) Int. Cl.: H04M 15/00

(54) **Système et procédé permettant d'optimiser le choix de contrat de téléphone par l'étude automatisée des factures électroniques de téléphone**

(30) Priorité: 05.09.2007 FR 0706227
(71) Demandeur: Bechouche, Philippe, 95230 Soisy sous Montmorency (FR)
(72) Inventeur: Bechouche, Philippe, 95230 Soisy sous Montmorency (FR)

(57) **Abrégé**

L'invention consiste en un procédé d'analyse automatique des factures électroniques de téléphone FE, permettant de trouver le profil d'un usager et de lui proposer ensuite le contrat et options aux meilleures conditions.

L'usager se connecte sur un site Internet à l'aide d'un dispositif de communications DC et envoie sa facture FE par courrier électronique.
Le système selon l'invention traite la facture et affiche sur l'écran de l'usager le contrat optimal.
Ce procédé d'optimisation comprend différentes phases de traitement des données réalisées par un programme informatique.
Le système comporte une architecture Web constituée d'un serveur HTTP Internet (SI) destiné à servir d'interface avec l'usager, d'un serveur d'application (SA) destiné à traiter les factures électroniques et d'une base de données (BD1) destinée à enregistrer les données se rapportant au traitement des factures.

## Description

### 1. Domaine technique

L'invention consiste en un procédé d'analyse automatique des données détaillées des communications contenues dans les factures électroniques de téléphone FE, en particulier de téléphone mobile, permettant de trouver le profil d'un usager et de lui proposer ensuite le contrat optimal avec les meilleures conditions et options.
L'invention permet ainsi à l'usager de faire des économies sur ses factures à venir, à la condition que celui-ci ne modifie pas ses habitudes de téléphonie.
L'invention fait partie du domaine des services Internet et des outils d'aide à la décision appliquée aux contrats de téléphone.

### 2. Etat de la technique antérieure.

La forte concurrence entre les opérateurs de télécommunications a incité ces derniers à proposer aux usagers une panoplie de contrats avec possibilité de les personnaliser. Ces contrats offrent généralement différentes options avec des tarifs d'appel variant selon le jour, l'heure de l'appel, la destination, le numéro appelé ou l'opérateur du numéro appelé ... etc.
Compte tenu de la variété et de la complexité des offres, il est évident que l'usager ne peut fixer son choix sur le contrat approprié.
Tenu au désagrément de naviguer sur le site Internet de chacun des opérateurs pour étudier les différentes offres de contrat, il sera en définitive incapable de déterminer les options optimales de son contrat en raison de la complexité d'une telle opération qui devrait intégrer une connaissance précise de son profil téléphonique, du calcul complet du coût de chacun des contrats de téléphone et options sur le marché, et de la nécessaire comparaison du coût de chacun des contrats.
En effet, comment répondre avec suffisamment de pertinence à une telle question ? Est-il plus avantageux d'avoir des appels illimités vers trois numéros de téléphone à certaines heures de la journée toute la semaine ou bien d'avoir une réduction de 50% sur tous les appels d'un certain opérateur en fin de semaine ?
Certains opérateurs proposent certes leur aide pour le choix d'un contrat, soit dans la boutique ou soit sur leur site Internet en invitant l'usager à répondre à un questionnaire détaillé sur ses habitudes d'usage de téléphonie. Mais l'usager se trouve très généralement dans l'incapacité de donner des réponses satisfaisantes au questionnaire. L'opérateur se trouve alors dans l'impossibilité d'exploiter efficacement l'information pour offrir des options de contrat appropriées à son client ; au surplus celui-ci sera privé de l'information relative à des contrats éventuellement plus avantageux que proposeraient d'autres concurrents.
L'idée de comparer les prix des services n'est pas nouvelle. Avec l'extension d'Internet les usagers sont sensibles à l'aspect du moindre coût des services (billets de train, d'avion, voyages ...) et le coût de la téléphonie n'échappe pas à ce phénomène.

Dans l'état actuel de la technique le brevet US-B1-6 631 (FLEMING III HOYT A [US] du 7 octobre 2003) décrit un système automatique d'optimisation du choix de contrat de téléphone à partir de statistiques d'usage. Mais la complexité des contrats et options rend cette opération imprécise lorsque l'on ne dispose pas des statistiques spécifiques à ce contrat. Au surplus ce procédé présente pour l'usager l'inconvénient de devoir se procurer des statistiques d'usage variées et en nombre suffisant.

### 3. Exposé de l'invention

La présente invention remédie précisément aux inconvénients de la méthode précédente car l'optimisation se réalise à partir des données détaillées des communications contenues dans les factures électroniques.
Pour l'usager le système est d'utilisation simple. Il lui suffit de fournir une ou plusieurs factures électroniques.
Par ailleurs le résultat d'optimisation sera précis car le système élabore les statistiques spécifiques pour chaque contrat et options de contrat.

Le procédé mis en oeuvre par l'invention permet une comparaison entre toutes les offres de contrats téléphoniques ainsi que l'évaluation du montant de la facture à venir dans le contrat choisi au cas où l'usager ne modifiait pas bien entendu ses habitudes de téléphonie.

### - De quelques définitions

**On entend par facture électronique de téléphone FE** une facture sous forme d'un fichier au format PDF, Word^{™}, Excel^{™}, txt (texte) ou bien au format d'une image obtenue après avoir scanné une facture de téléphone en papier ou tout autre format susceptible d'être envoyé par courrier électronique.
Les factures électroniques FE comprennent l'information détaillée concernant les appels de voix et éventuellement aussi les vidéo appels, SMS, MMS (messages électroniques de texte ou vidéo courts) et autres services de téléphonie.

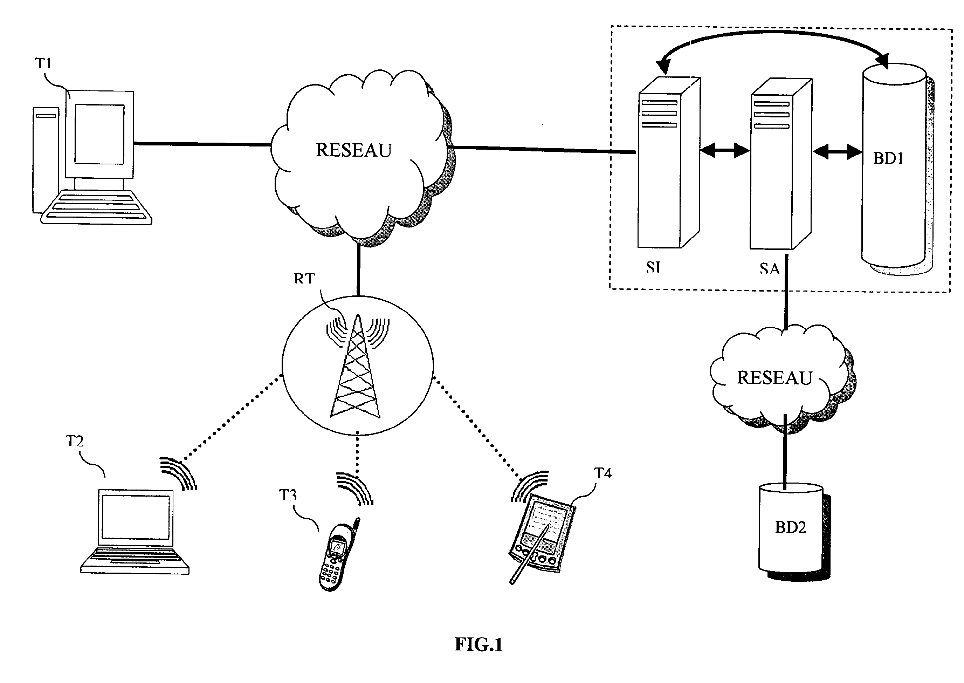

**On appelle dispositif de communication DC** tout dispositif qui permet d'accéder directement ou indirectement au réseau de communications (Internet par exemple).
Le dispositif de communications DC peut être un ordinateur connecté à un réseau de communications (par exemple Internet) par une liaison câblée avec un modem ou router T1 (figure1), un réseau de communications sans fil RT (figure1) (par exemple Internet sans câble de type Wifi) T2 (figure1), ou un dispositif mobile de type téléphone mobile T3 (figure1) ou assistant électronique personnel (PDA) T4 (figure1).
Bien entendu, le dispositif de communications DC dispose d'un navigateur Web dans la réalisation selon l'invention.

On rappellera que le **contrat de téléphone peut être défini** comme un contrat par lequel un usager s'engage à régler à un opérateur le montant de ses factures de téléphone. L'opérateur de son coté est tenu d'assumer les services que stipule le contrat aux conditions auxquelles l'usager a adhéré.
L'aspect concerné par l'invention se rapporte essentiellement aux modalités d'usage et de tarification prévues, en précisant que le contrat peut concerner un numéro ou un ensemble de numéros de téléphone (contrat de famille, d'entreprise, de personne morale...).

**Le profil téléphonique d'un usager** est une information utile pour connaître ses habitudes téléphoniques. Ici le procédé selon l'invention s'intéresse en particulier à deux types de profils :
- le profil par numéros qui permet de savoir suivant quelle fréquence et durée, l'usager a l'habitude d'appeler certains numéros.
- le profil par heures qui permet de savoir la quantité d'appels par tranche horaire.

### -Brève description des figures :

La figure 1 représente un bloc-diagramme schématique d'un système de traitement automatisé des factures de téléphone en format électronique selon l'invention ;
La figure 2 représente un organigramme de traitement des factures électroniques par le serveur HTTP Internet SI et par le serveur d'application SA.
La figure 3 représente une facture électronique de téléphone en format PDF.
La figure 4 représente les données formatées de cette facture électronique de téléphone.
La figure 5 représente une table de type t1 (appels/prix) de la base de données BD1.
La figure 6 représente une table de type t2 (numéros/prix) de la base de données BD1.
La figure 7 représente une table de type t3 (heures/prix) de la base de données BD1.
La figure 8 représente un organigramme de fonctionnement de l'invention dans un site de commerce électronique.
La figure 9 représente un organigramme de fonctionnement de l'invention dans un site Internet sponsorisé.

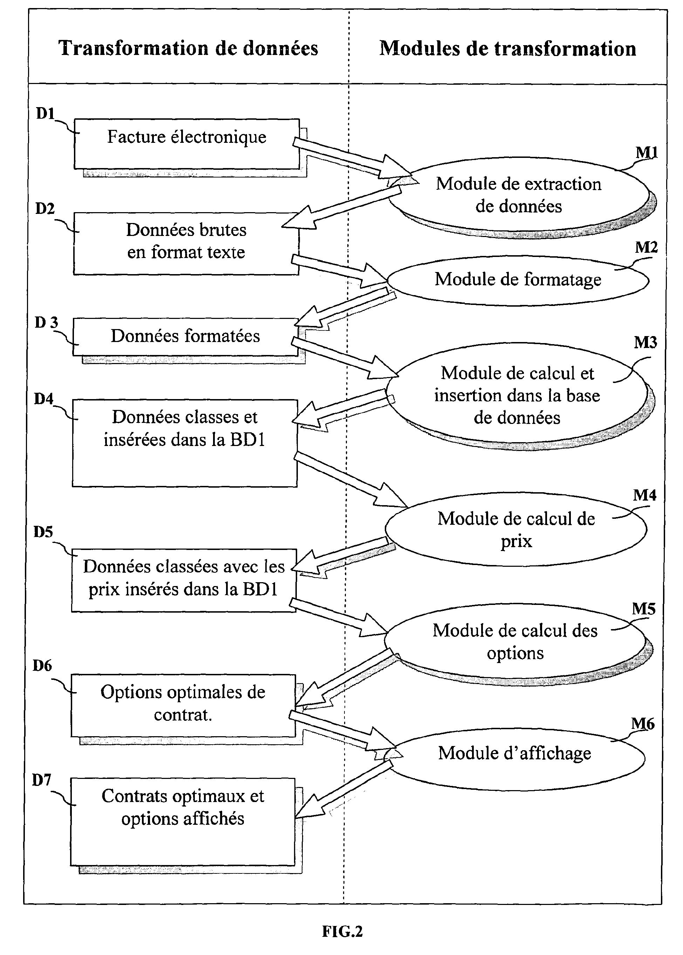

Les figures 1 et 2 se rapportent à la description du fonctionnement de l'invention, son architecture Web d'une part, et d'autre part son fonctionnement interne au niveau du serveur d'application.

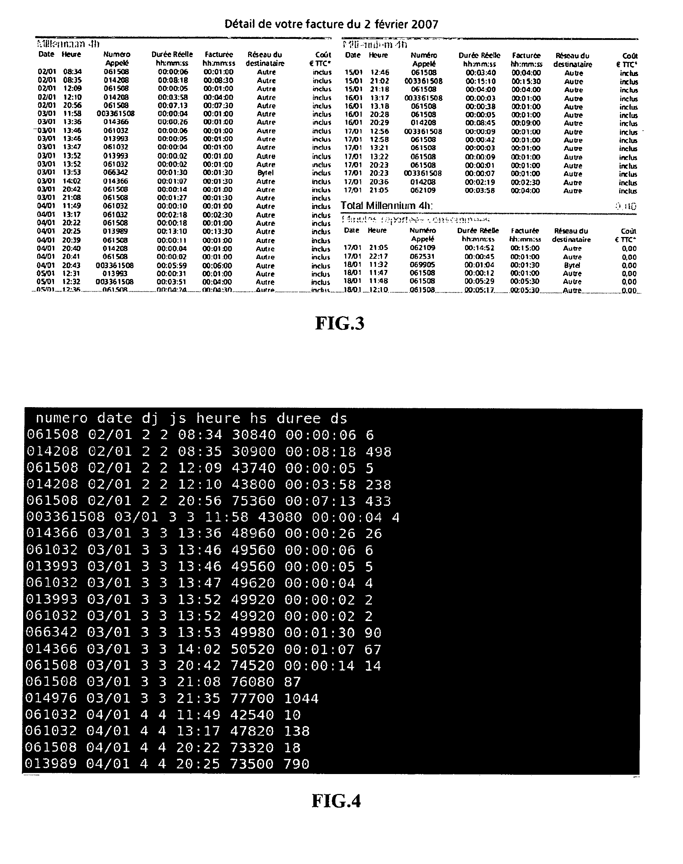

Les figures 3 à 7 représentent les différentes étapes de traitement des données décrites dans la figure 2.

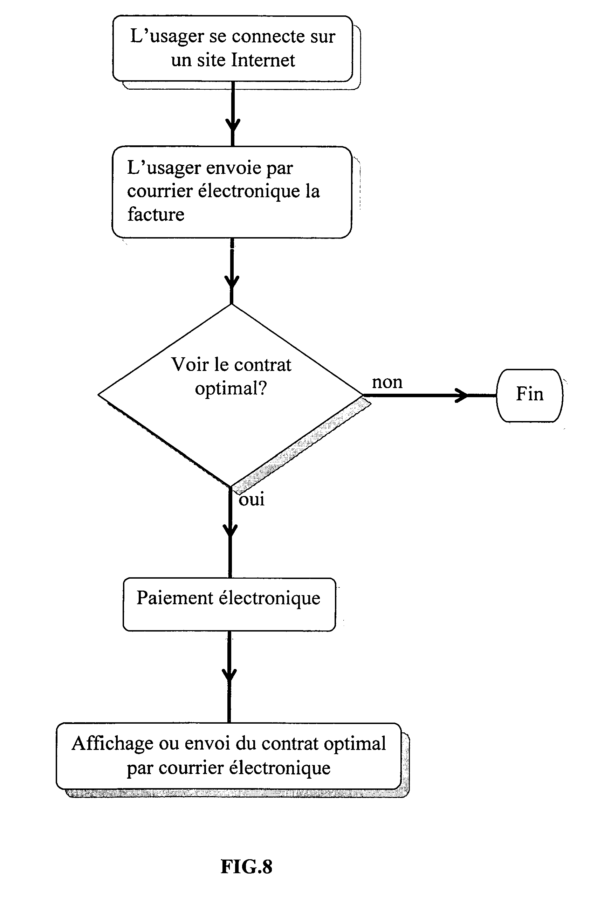

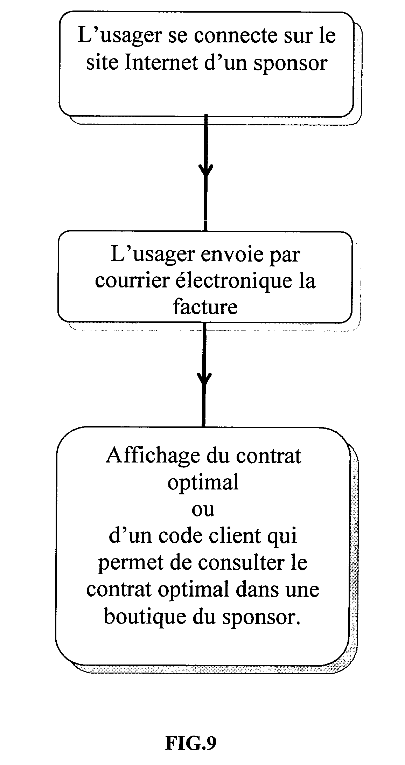

Les figures 8 et 9 illustrent des applications de l'invention.

**La** **Figure 1** représente le fonctionnement schématique d'un système de traitement automatisé des factures électroniques.
Le fonctionnement de l'invention repose sur une architecture Web de type Client/Serveur.
L'usager se connecte sur un site Internet à partir d'un dispositif de communication DC (Client) par le protocole de base HTTP (Hyper Text Transfert Protocole).
Le serveur HTTP (Internet) SI propose à l'usager d'envoyer par courrier électronique ou par FTP (File Transfert Protocole) une ou plusieurs de ses dernières factures de téléphone.
Eventuellement, le serveur HTTP (Internet) SI lui demande des informations complémentaires susceptibles de le faire bénéficier d'avantages tarifaires (s'il a moins de 26 ans ou s'il est étudiant ... etc.).
Les factures sont transmises du serveur HTTP (Internet) SI vers un serveur d'application SA où elles sont traitées par un programme informatique.
Les données de la facture de téléphone sont extraites, analysées, formatées par le programme puis insérées dans une base de données BD 1. Il est à noter que le serveur d'application SA peut interagir avec une base de données externe au système BD2 pour obtenir des informations utiles au procédé d'optimisation.
La structure des données dans la base de données BD1 permet ainsi de calculer aisément les prix des communications correspondant à tout type de contrat proposé par les opérateurs.

Le programme calcule le prix de chacun des appels pour tout contrat proposé sur le marché et recherche les conditions optimales pour chaque contrat.
Ensuite, le serveur HTTP (Internet) SI affiche sur l'écran du terminal de l'usager, le résultat de la recherche ainsi que le montant de l'économie réalisée.
Cette invention permet ainsi de déterminer le contrat de téléphone le plus avantageux pour l'usager.
En outre, le serveur HTTP peut afficher des statistiques ou graphiques sur le profil téléphonique selon les numéros ou selon les tranches horaires d'usage du téléphone. Ceci permet éventuellement de faciliter à l'usager de fixer son choix sur un autre contrat.

**La** **Figure 2** représente un organigramme de traitement des factures électroniques par le serveur d'application SA et le serveur HTTP SI selon l'invention.
Plus exactement les modules M1 à M5 sont exécutés par le serveur d'application SA et le module M6 est exécuté par le serveur HTTP (Internet) SI.
Sur la partie gauche de la figure sont représentées les différentes étapes de traitement des données et sur la partie droite, les modules intervenant dans la transformation de ces données.
La facture électronique D1 parvient par courrier électronique ou par FTP au serveur d'application SA dans son format d'origine par exemple le format PDF.
Elle est traitée ensuite par un module d'extraction M1 qui la transformera en un fichier texte D2 au format txt (texte). Ce fichier D2 est traité par le module de formatage M2 qui retire les éléments inutiles de la facture, et ne retient que les informations indispensables au calcul des contrats:
les appels, le numéro appelé, la date, l'heure de début de la communication, sa durée et éventuellement l'opérateur appelé.
La caractéristique du module de formatage M2 est en outre de pouvoir traiter les factures électroniques provenant des opérateurs quel que soit le format qu'ils utilisent. L'information formatée est ensuite traitée par le module de calcul M3 puis insérée dans la base de données BD1 (figure 1). Ce module peut éventuellement consulter une base de données externe BD2 (figure 1) pour compléter l'information qui va s'insérer dans la première table t1 de la base de données BD1. Il peut s'agir en particulier de l'information se rapportant à l'opérateur de chaque numéro appelé.
Dans la première table t1 de la base de données BD1, figurent de nouveaux champs comme le numéro du jour de l'année (depuis le premier janvier) et le jour de la semaine qui sont calculés à partir de la date.
L'heure du début de l'appel et la durée de chacun des appels sont calculées en secondes.

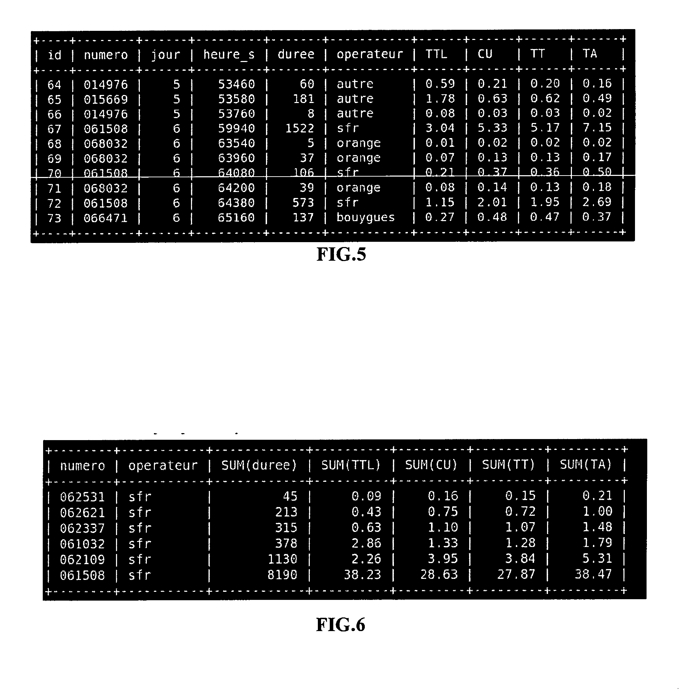

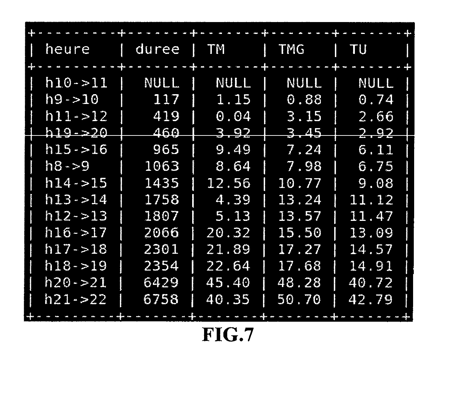

Les tarifs des contrats téléphoniques du marché sont préalablement introduits dans le module M4 et les options de contrat dans le module M5.
À partir des données D4 de la première table t1, le module M4 calcule le prix correspondant à chacun des contrats existant sur le marché pour chaque appel sans tenir compte des options de contrat.
Les prix calculés sont insérés dans la table t1 (figure 5).
Le module de calcul M4 crée une table t2 (figure 6) à partir de la table t1, ayant comme entrée principale les différents numéros appelés.
Le deuxième champ de la table t2 comprend la somme des durées des appels effectués à ce numéro pendant la période de facturation.
Les champs suivants de la table t2 comprennent pour chaque contrat la somme des prix des appels effectués à ce numéro pendant la période de facturation.
Ce module M4 crée également une table t3 (figure 7) à partir de la table t1.
La table t3 comprend comme entrée principale les tranches horaires de la journée.
Le module de calcul M4 associe à chacune des heures de la journée, un deuxième champ correspondant à la somme des durées des appels effectués dans cette tranche horaire, et aux champs suivants la somme des prix des appels effectués dans cette tranche horaire, pour chaque type de contrat.
Les données structurées de cette manière sont représentées dans le cadre D5.
A ce niveau du traitement des données, il apparaît clairement que la table t2 (figure 6) représente le profil répondant à la question:
L'usager a l'habitude d'appeler qui ?
La table t3 (figure 7) représente le profil répondant à la question :
L'usager a l'habitude d'appeler quand ?

Les opérateurs offrent de nombreux contrats de téléphone avec possibilité de choisir entre plusieurs options.
Comment dans ces conditions le procédé selon l'invention va-t-il déterminer les options optimales pour chaque contrat ?
Ce sera précisément le module d'optimisation M5 qui a pour fonction de calculer les meilleures options de contrat.
Ainsi :
- A l'aide d'une table de type t2 (figure 6), le module M5 résout un problème d'optimisation se rapportant à la réduction tarifaire sur un ou plusieurs numéros choisis à l'avance par l'usager.
- A l'aide d'une table de type t3 (figure 7), le module M5 résout un problème d'optimisation se rapportant à la réduction tarifaire sur certaines heures d'appel choisies à l'avance par l'usager.
Le module M5 ayant déterminé l'option optimale d'un contrat, les prix des appels sont recalculés en prenant en compte cette option. Les tables t1, t2 et t3 de la base de données BD1 sont alors réactualisées. La facture optimale de ce contrat calculée à partir de la table t1 est par la suite comparée aux autres factures optimales des autres contrats.
Enfin, le module d'affichage M6 qui s'exécute sur le serveur HTTP (Internet) SI permet d'afficher le ou les contrats optimaux ainsi que les options de contrat optimales D7.
On notera que le procédé selon l'invention s'applique aux autres types de communications ou services facturés comme les SMS, MMS ou vidéo appels.
Pour les vidéo appels, on utilisera la même décomposition que celle réalisée pour les communications téléphoniques dans la table t1.
En ce qui concerne, les SMS et MMS, les tables t1, t2 et t3 sont encore plus simples puisqu'il n'y a pas de champ durée.
La stratégie d'optimisation d'un contrat comportant plusieurs numéros de téléphones est analogue au cas où le contrat n'est affecté que d'un seul numéro :
Il s'agit d'optimiser les options pour chaque type de contrat et ensuite de procéder à un examen comparatif des factures optimales associées à chaque contrat.

### 4. Exemple concret de traitement d'une facture électronique pour parvenir à son optimisation.

Reprenons à cet effet les commentaires des figures.
**La** **Figure 3** représente une facture électronique de téléphone au format PDF telle qu'elle est produite par un opérateur de télécommunications.
Les appels sont listés dans un tableau comportant des informations entre autres, la date, l'heure, le numéro appelé, la durée de l'appel ainsi que le coût de l'appel.
Le module d'extraction M2 (figure 2) extrait les données brutes et le module de formatage M3 (figure 2) supprime les éléments inutiles.

Dans **la** **Figure 4** sont représentées les données de cette facture après traitement par le module de formatage M3 (figure 2) et le calcul par le module M4 (figure 2) avant d'être insérées dans la base de données BD1 (figure 1).
Ces données étant structurées en forme de tableau, restera l'information principale concernant les appels : le numéro, la date, le numéro du jour depuis le début de l'année (dj), le jour de la semaine (js) (par exemple 1 correspond au lundi, 2 au mardi ...), l'heure de l'appel, l'heure de l'appel en secondes (hs) depuis minuit, la durée et la durée en secondes (ds).
Les éléments comme le jour de la semaine (js) sont essentiels pour le calcul du prix de la facture car les appels en fin de semaine (samedi et dimanche) sont en général facturés à des tarifs différents de ceux de la semaine (lundi à vendredi).
L'heure de l'appel calculée en secondes (hs) est également essentielle quand les tarifs des communications varient en fonction de l'heure de l'appel dans la journée.

**La** **Figure 5** représente la table t1 de la base de données BD1 (figure1) après insertion par le module de calcul des prix M4 (figure 2). On notera que la table t1 dispose d'un champ id permettant d'identifier chacun des appels (ici les appels 64 à 73) et du champ opérateur qui ne figurait pas dans les données formatées.
L'opérateur correspondant aux numéros appelés a été obtenu à partir d'une source externe à la facture comme par exemple la base de donnée BD2 (figure1).
Enfin, les colonnes TTL, CU, TT, TA représentent le prix de chacun des appels suivant 4 différents contrats. Ces prix sont tout d'abord calculés sans option de contrat. Ils seront par la suite réactualisés pour les appels entrant dans le cadre d'une option.

Décrivons à présent comment le module M5 (figure2) peut optimiser deux types d'option de contrat à partir des tables t1, t2 et t3 de la base de données BD1.

### a) Exemple d'optimisation par rapport aux numéros appelés

Choisissons en exemples les « Forfaits Essentiel et Evolution pro » de SFR (juillet 2007) comportant l'option «Les illimités SFR » qui permet des « appels illimités 24h/24 7j/7 vers trois mobiles SFR ». Il s'agit là d'un problème d'optimisation par rapport aux numéros appelés.
Comment les modules M4 et M5 (figure2) vont-ils choisir les trois mobiles SFR de manière à optimiser cette option de contrat ?

### Explication :

Il s'agit de déterminer les numéros des trois mobiles SFR avec un coût maximal si cette option n'existait pas. Effectivement si on applique cette option à ces trois mobiles, la facture de ce contrat sera minimale.
Le module M4 crée une table t2 (figure 6) parmi tous les numéros appelés lorsque l'opérateur est SFR.

**La** **Figure 6** représente la table t2 de la base de données BD1 créée par le module M4 (figure 2).
La table t2 met en relation chacun des numéros appelés avec la somme des prix des appels à ce numéro durant la période facturée pour chaque type de contrat.
Dans la table t2 (figure 6) ont été classés les numéros appelés par durée croissante et les sommes des prix correspondant à divers types de contrats sont affichées dans les colonnes SUM(TTL), SUM(TU), SUM(TT), SUM(TA).
Le module M5 sélectionne les trois numéros avec le prix maximal (ici les trois du bas de la table t2) et recalcule les prix des appels dans les tables t1 (figure 5), t2 (figure 6) et t3 (figure 7) (ici en les remplaçant par 0) pour ces trois numéros.
Ceci permet à l'usager de choisir de manière optimale cette option, les trois numéros étant déterminés par le module M5.

### b) Exemple d'optimisation par rapport aux heures d'appel :

Le contrat « Contrato A Todos » offert par Orange (France Telecom Espagne) en Espagne (juillet 2007 ) propose un tarif normal des appels du lundi au vendredi de 8h à 22h et un tarif réduit aux autres heures et en fin de semaine.
Ce contrat propose par ailleurs à l'usager, l'option d'appeler en tarif réduit pendant 5 heures de son choix en semaine entre 8h et 22h.
Comment les modules M4 et M5 (figure2) déterminent-ils les 5 heures optimales pour cette option de contrat?

### Explication :

Il s'agit simplement de trouver les 5 tranches horaires entre 8h et 22h en semaine au cours desquelles la consommation a été la plus importante s'il n'y avait pas d'option. Ensuite, lorsqu'on appliquera le tarif réduit à ces 5 tranches horaires, la facture sera minimale pour ce contrat.
**La** **figure 7** nous apporte la réponse :
Elle représente la table t3 créée par le module M4 (figure 2).
La table t3 met en relation chaque tranche horaire de la journée (par exemple 10h-11h) avec la somme des prix des appels effectués dans cette tranche horaire pour chaque type de contrat.
Le module M4 crée une table t3 (figure 7) en ne prenant en compte que les appels effectués du lundi au vendredi, c'est à dire les appels dont le numéro du jour vont de 1 à 5 dans la table t1 (figure5), et en calculant la somme des prix au tarif normal correspondant à chaque tranche horaire (8h-9h, 9h-10h,..., 21h-22h) durant la période facturée.

Dans la table t3 (figure 7), nous avons classé les tranches horaires par durée croissante pour trois types de contrats différents TM, TMG, TU.
Le module M5 détermine ensuite les 5 tranches horaires avec le prix maximal (ici les cinq lignes au bas de la table t3 affichée) puis recalcule le prix des communications au tarif réduit dans les tables t1 et t2 pour ces tranches horaires.
Bien entendu, ces 5 tranches horaires seront celles que devra choisir l'usager s'il veut optimiser cette option de contrat.

### 5. Applications de l'invention.

**La** **figure 8** montre un exemple d'application de l'invention dans un site de commerce électronique.
L'usager se connecte sur un site Internet et envoie une ou plusieurs factures électroniques de téléphone.
Le procédé selon l'invention affiche après paiement par l'usager le contrat optimal avec les options optimales ou son profil téléphonique détaillé. Ici l'invention est utilisée comme un service Internet à valeur ajoutée.
Les données brutes sont ainsi traitées de manière à permettre à l'usager de choisir en toute connaissance de cause le contrat le plus avantageux.

**La** **figure 9** montre un exemple d'application de l'invention dans un site Internet sponsorisé.
Le sponsor peut être par exemple un opérateur de télécommunications ou un commerçant qui vend des abonnements téléphoniques.
L'usager se connecte sur le site Internet du sponsor et envoie une ou plusieurs factures électroniques de téléphone. Le procédé selon l'invention affiche alors sur son écran le contrat optimal avec les options optimales.
Selon une autre variante, l'usager recevra un numéro de dossier et sera invité à consulter son contrat optimal avec les options optimales dans une boutique du sponsor.

## Revendications

1. Procédé d'optimisation du choix de contrat de téléphone qui comprend une architecture Web de type Client/Serveur avec un serveur HTTP Internet SI (figure 1) qui permet l'interface avec l'usager, un serveur d'application SA (figure 1) effectuant le traitement des données et interagissant avec une base de données BD1 (figure 1) **caractérisé en ce que** l'optimisation se réalise par exploitation automatisée des communications ou consommations détaillées, portées dans les factures électroniques de téléphone.

2. Procédé d'optimisation du choix de contrat de téléphone selon la revendication 1 **caractérisé en ce que** l'optimisation se réalise au moyen d'une base de données BD1 qui contient les données des consommations détaillées extraites des factures électroniques FE et d'un serveur d'application SA qui calcule les statistiques spécifiques à chaque contrat et options de contrat à partir des données structurées dans la base de données BD 1.

3. Procédé d'optimisation du choix de contrat de téléphone selon les revendications 1 et 2, comprenant différentes phases de traitement des données :
- Extraction des données de la facture électronique (module M1 -figure 2)
- Formatage des données (module M2 -figure 2)
- Calcul et insertion des données dans une base de données BD1 (module M3 figure 2)
- Calcul des prix des appels correspondant aux divers contrats (module M4 figure 2)
- Détermination des options optimales par type de contrat (module M5 figure 2)
- Affichage des contrats optimaux avec leurs options (module M6 figure2),
**caractérisé en ce que :**
-la base de données BD1 stocke les données formatées structurées en tables de type t1 (appels, prix -figure 5) qui permettent le calcul du coût de chaque contrat avec ses options ; en tables de type t2 (numéros, somme des prix par numéro - figure 6) et en tables de type t3 (tranches horaires, somme des prix par tranche horaire -figure7),
-les modules de calcul des prix M4 et d'optimisation M5 utiliseront, en conjonction avec les tables de type t1, les tables de type t2 pour optimiser les contrats ou options liés aux numéros appelés, et les tables de type t3 pour optimiser les contrats et options liés aux tranches horaires appelée,
- le résultat des contrats optimaux et options optimales est communiqué sur le dispositif de communications DC de l'usager à travers le réseau de communications.

4. Procédé d'optimisation du choix de contrat de téléphone selon les revendications 1 et 2 **caractérisé en ce que** l'optimisation des factures électroniques de téléphone prend en compte les appels de voix, les vidéo appels, les SMS, MMS et autres services de téléphonie éventuellement contenus dans la facture électronique.

5. Procédé d'optimisation du choix de contrat de téléphone selon les revendications 1 et 2 **caractérisé en ce que** le contrat de téléphone qui sera optimisé se rapporte à un seul numéro de téléphone ou peut concerner un ensemble de numéros (cas d'une entreprise, ou d'une institution ... etc.).

6. Procédé d'optimisation du choix de contrat de téléphone selon les revendications 1 et 2 **caractérisé en ce que** l'usager transmet ses factures électroniques de téléphone à l'aide d'un dispositif de communications par courrier électronique, ou par téléchargement sur le serveur SI, ou encore les introduit directement dans l'ordinateur qui héberge le serveur SI.

7. Procédé d'optimisation du choix de contrat de téléphone selon les revendications 1 et 2 **caractérisé en ce que** le résultat des contrats optimaux et options optimales est affiché dans le navigateur du dispositif de communications de l'usager ou envoyé à celui-ci sous forme d'un fichier imprimable (par exemple au format text ou pdf).
